# EUROPÄISCHE PATENTSCHRIFT

(11) **EP 1 098 813 B1**
(45) Veröffentlichungstag und Bekanntmachung des Hinweises auf die Patenterteilung: **06.11.2002**
(21) Anmeldenummer: 99941456.8
(22) Anmeldetag: 23.07.1999
(51) Int. Cl.: B64D 11/02, B60R 15/04, E03D 5/12

(54) **VAKUUMTOILETTENSYSTEM FÜR EIN FAHRZEUG**
VACUUM TOILET SYSTEM FOR A VEHICLE
SYSTEME DE TOILETTES A DEPRESSION POUR VEHICULE

(30) Priorität: 31.07.1998 DE 19834537
(43) Veröffentlichungstag der Anmeldung: 16.05.2001
(73) Patentinhaber: AOA Apparatenbau Gauting GmbH, 82131 Gauting (DE)
(72) Erfinder: KARLSSON, Kent, D-82343 Pöcking (DE); KECHELE, Karl, D-86161 Augsburg (DE)
(74) Vertreter: Grättinger & Partner (GbR)
(86) Internationale Anmeldenummer: EP9905270
(87) Internationale Veröffentlichungsnummer: WO00007878

(56) Entgegenhaltungen:
- EP-A- 0 584 031
- US-A- 4 521 925
- US-A- 5 214 807

## Beschreibung

Die vorliegende Erfindung betrifft ein Vakuumtoilettensystem für ein Fahrzeug, insbesondere für ein Passagierflugzeug, umfassend eine Mehrzahl von Toiletten, einen Sammelbehälter, ein die Toiletten über jeweils ein Spülventil mit dem Sammelbehälter verbindendes Leitungsnetz, einen strömungstechnisch mit dem Sammelbehälter verbundenen Vakuumgenerator, einen Spülwasser-Vorratsbehälter und ein die Toiletten über jeweils ein Spülwasserventil und/oder eine Spülwasserpumpe mit dem Spülwasser-Vorratsbehälter verbindendes Spülwassernetz, wobei eine auf das Spülventil und das Spülwasserventil bzw. die Spülwasserpumpe der einzelnen Toiletten einwirkende Spülsteuerung vorgesehen ist, die über ein der betreffenden Toilette zugeordnetes Auslösemittel betätigbar und in der ein Standard-Spülprogramm abgespeichert ist.

Vakuumtoilettensysteme der vorstehend genannten Art sind in vielfältigen Ausgestaltungen bekannt. Sie sind beispielsweise in FR-A-2286922, EP-A-0530859 und US-A-3995328 offenbart. Beim Einsatz derartiger Vakuumtoilettensysteme in Flugzeugen wird der Unterdruck in dem Sammelbehälter und im Leitungsnetz in der Reiseflughöhe erzeugt, indem der Sammelbehälter über ein Rückschlagventil zur Umgebung hin offen ist. Am Boden sowie bei geringen Flughöhen (unter ca. 6.000 m) sorgt der Vakuumgenerator bei jedem einzelnen Spülvorgang für den erforderlichen Unterdruck in Sammelbehälter und Leitungsnetz.

In bekannten Vakuumtoilettensystemen der gattungsgemäßen Art ist zur Aufrechterhaltung der Systemfunktion ein unerwünscht hoher Wartungsaufwand erforderlich. In diesem Zusammenhang sind zwei Aspekte von Bedeutung. Zum einen darf die lichte Weite der Leitungen des Leitungsnetzes ein bestimmtes Maß nicht überschreiten, um eine ausreichende Förderung des Förderguts zum Sammelbehälter zu erhalten. Auf der anderen Seite wirken sich bei entsprechend geringen Leitungsquerschnitten Ablagerungen, die sich an den Innenwänden der Leitungen ausbilden, besonders schädlich auf das Transportverhalten aus. Dabei spielt auch eine Rolle, daß das spezifische Fördergut eine ausgeprägte Tendenz aufweist, an den Innenwänden der Leitungen des Leitungsnetzes anzuhaften. Ferner spielt in der Praxis eine Rolle, daß in abgestellten Flugzeugen die Temperaturen häufig weit unter den Gefrierpunkt sinken, so daß es im Leitungsnetz zu Vereisungen kommt.

Im Hinblick auf die vorstehend dargelegten Nachteile des Standes der Technik liegt der vorliegenden Erfindung die Aufgabe zugrunde, ein Vakuumtoilettensystem der eingangs genannten Art zu schaffen, das bei einem vergleichsweise geringen Wartungsaufwand ein hohes Maß an Zuverlässigkeit und Betriebssicherheit aufweist.

Gemäß der vorliegenden Erfindung wird diese Aufgabe dadurch gelöst, daß eine zentrale Leerspülsteuerung vorgesehen ist, die auf den Vakuumgenerator sowie die Spülventile und die Spülwasserventile bzw. die Spülwasserpumpen sämtlicher Toiletten einwirkt und bei Auslösung ein sämtliche Toiletten erfassendes Leerspülprogramm mit mindestens einem Leerspülzyklus pro Toilette ablaufen läßt. Das erfindungsgemäße Vakuumtoilettensystem zeichnet sich gegenüber dem Stand der Technik somit durch eine zentrale Leerspülsteuerung aus, die jene Spülsteuerung ergänzt, die auf die einzelnen Toiletten einwirkt und in diesen nach Benutzung ein Standardspülprogramm ablaufen läßt. Die erfindungsgemäß vorgesehene zentrale Leerspülsteuerung, die in sämtlichen Toiletten des Vakuumtoilettensystems mindestens einen Leerspülzyklus ablaufen läßt, ermöglicht eine gegenüber dem Stand der Technik entscheidend verbesserte Entleerung des Leitungsnetzes, so daß die Bildung von Ablagerungen in dem Leitungsnetz drastisch reduziert und darüberhinaus die Gefahr, daß bei einem abgestellten.Flugzeug Rückstände im Leitungsnetz einfrieren, ganz erheblich verringert ist. In diesem Zusammenhang kommt als Vorteil des erfindungsgemäßen Vakuumtoilettensystems zum Tragen, daß sich die Leerspülzyklen hinsichtlich ihrer Spülcharakteristik von dem Standard-Spülprogramm unterscheiden können, und daß ferner die in den einzelnen Toiletten ablaufenden Leerspülzyklen aufeinander und auf die Einbausituation der betreffenden Toiletten abgestimmt werden können. Beide Aspekte sind geeignet, das angestrebte Ergebnis weiter zu verbessern; auf sie wird weiter unten detaillierter eingegangen.

In der nachfolgenden Beschreibung wird die Erfindung im Zusammenhang mit Spülwassersystemen erläutert, bei denen die Spülwasserzufuhr im Standard-Spülprogramm und in dem Leerspülzyklus bzw. den Leerspülzyklen durch ein Spülwasserventil gesteuert wird, das für einen jeweils vorgegebenen Zeitraum geöffnet wird. Hierin liegt keine Beschränkung der vorliegenden Erfindung auf den Einsatz derartiger Spülwassersysteme. Vielmehr kann die Spülwasserzufuhr alternativ oder additiv durch eine der jeweiligen Toilette zugeordnete Spülwasserpumpe gesteuert werden, die für einen jeweils vorgegebenen Zeitraum in Betrieb gesetzt wird.

Mit ganz besonders großem Nutzen läßt sich das erfindungsgemäße Vakuumtoilettensystem einsetzen, wenn zumindest einzelne der Toiletten in Unterfluranordnung ausgeführt sind, indem das Leitungsnetz zumindest teilweise auf einem höheren Niveau als jene Toiletten angeordnet ist. Denn bei derartigen Unterflurtoiletten umfaßt das Leitungsnetz Steigrohre, in denen nach Ablaufen eines Standard-Spülprogramms ein Rückfluß stattfindet, mit dem Ergebnis, daß sich Spülwasser und Fördergut in erheblicher Menge am tiefsten Punkt der Steigleitung ansammeln, wo es dann zur Bildung von Ablagerungen und/oder zum Einfrieren der Rückstände kommen kann (siehe oben). Durch die in Anwendung des erfindungsgemäßen Vakuumtoilettensystems möglichen Leerspülzyklen, deren Spülcharakteristik auf eine möglichst vollständige Entleerung der Steigleitungen gerichtet ist, ist erstmals der Einsatz von wartungsarmen Unterflurtoiletten möglich. Dies hinwiederum ist ein wesentlicher ökonomischer Aspekt; denn auf diese Weise läßt sich die Transportkapazität von Passagierflugzeugen ganz erheblich steigern.

Im Rahmen der vorliegenden Erfindung können die Daten für die an den einzelnen Toiletten durchzuführenden Leerspülzyklen in einer zentralen Steuereinheit abgespeichert sein. Dabei ist es möglich, daß in der zentralen Steuereinheit ein für sämtliche Toiletten übereinstimmender Leerspülzyklus abgespeichert ist. In gleicher Weise ist es möglich, daß für die verschiedenen Toiletten je nach den baulichen Gegebenheiten Überflur- bzw. Unterfluranordnung; längere oder kürzere Steigleitungen) unterschiedliche Leerspülzyklen in der zentralen Steuereinheit abgespeichert sind. Insbesondere dann, wenn die Leerspülzyklen der einzelnen Toiletten sich voneinander unterscheiden, können die Daten der jeweiligen Leerspülzyklen auch in dezentralen Steuereinheiten abgespeichert sein. Die zentrale Leerspülsteuerung ist in diesem Falle jenen dezentralen Steuereinheiten übergeordnet; sie prüft in diesem Falle, ob die für die Auslösung erforderlichen Voraussetzungen (siehe unten) vorliegen und steuert die einzelnen dezentralen Steuereinheiten in einer vorgegebenen Reihenfolge an, um nacheinander die Leerspülzyklen zu initiieren.

Eine bevorzugte Weiterbildung der Erfindung zeichnet sich dadurch aus, daß das Leerspülprogramm pro Toilette mindestens einen Leerspülzyklus umfaßt, bei dem das Verhältnis der Öffnungsdauer von Spülwasserventil zu Spülventil größer ist als beim Standardspülprogramm. Durch diese Charakteristik des Leerspülprogramms läßt sich die Effizienz der Leerspülung zur möglichst vollständigen Entfernung von an den Rohrinnenwänden anhaftenden Rückständen optimieren. Dies gilt insbesondere, sofern das Vakuumtoilettensystem Unterflurtoiletten und diesen nachgeschaltete Steigleitungen umfaßt.

Eine wiederum andere bevorzugte Weiterbildung der Erfindung ist dadurch gekennzeichnet, daß das Leerspülprogramm pro Toilette zwei Leerspülzyklen mit einer unterschiedlichen Spülcharakteristik umfaßt. In diesem Sinne kann insbesondere vorgesehen sein, daß das Verhältnis der Öffnungsdauer von Spülwasserventil zu Spülventil beim zweiten Leerspülzyklus geringer ist als beim ersten Leerspülzyklus. Die unterschiedliche Spülcharakteristik der einzelnen Leerspülzykten gestattet wiederum eine optimale Auslegung des erfindungsgemäßen Vakuumtoilettensystems. Insbesondere dann, wenn dieses Unterflurtoiletten umfaßt, ist die vorstehend spezifizierte Spülcharakteristik, bei der beim zweiten Leerspülzyklus im Verhältnis zur Spülwassermenge mehr Luft durchgesetzt wird, mit besonderem Vorteil zur möglichst vollständigen Entleerung der Steigleitungen, einschließlich der Entfernung von Spülwasser einsetzbar.

Das erfindungsgemäße Vakuumtoilettensystem arbeitet besonders effizient, wenn die Leerspülzyklen der einzelnen Toiletten nacheinander ablaufen, und zwar in einer vorgegebenen gestaffelten Weise. Besonders zweckmäßig ist dabei eine Überlappung der Leerspülzyklen zweier Toiletten der Gestalt, daß das Spülwasserventil einer Toilette bereits, geöffnet wird, wenn das Spülventil oder ggf. das Spülwasserventil einer anderen Toilette noch geöffnet ist. Durch eine derartige Überlappung wird der durch den Vakuumgenerator erzeugte Unterdruck optimal ausgenutzt. Dies ist von ganz erheblichem Vorteil im Hinblick auf die Lebensdauer des Vakuumgenerators. Denn dieser ist im allgemeinen nicht auf Dauerbetrieb ausgelegt. Durch die vorstehend erläuterte Staffelung der Leerspülzyklen der einzelnen Toiletten des Vakuumtoilettensystems wird die Betriebsdauer des Vakuumgenerators für die vollständige Abwicklung des Leerspülprogramms minimiert. Dementsprechend wird eine Überhitzung des Vakuumgenerators vermieden und auf diese Weise seine Lebensdauer erhöht.

Umfaßt gemäß der weiter oben erläuterten Weiterbildung der Erfindung das Leerspülprogramm pro Toilette zwei Leerspülzyklen, so laufen besonders bevorzugt zwei jeweils sämtliche Toiletten erfassende Leerspülzyklensequenzen nacheinander ab. Dies bedeutet, daß das Leerspülprogramm zwei Leerspülzyklensequenzen umfaßt, indem nacheinander zunächst ein erster und anschließend ein zweiter Leerspülzyklus abläuft. Diese Weiterbildung der Erfindung hat als Hintergrund, die Effizienz der Entleerung des Leitungsnetzes zu optimieren.

Im Rahmen der vorliegenden Erfindung kann die Auslösung des durch die zentrale Leerspülsteuerung gesteuerten Leerspülprogramms manuell wie auch automatisch erfolgen. Aus Gründen des Bedienungskomforts ist dabei der automatischen Initiierung des Leerspülprogramms der Vorzug zu geben. In diesem Sinne zeichnet sich eine bevorzugte Weiterbildung eines in ein Passagierflugzeug eingebauten erfindungsgemäßen Toilettensystems dadurch aus, daß auf die zentrale Leerspülsteuerung ein Bodenkontaktsensor einwirkt, der ein das Leerspülprogramm initiierendes Signal abgibt. In diesem Falle setzt die durch die zentrale Leerspülsteuerung gesteuerte Leerspülung sämtlicher an das Vakuumtoilettensystem angeschlossene Toiletten ein, sobald das Fahrwerk des betreffenden Flugzeuges auf der Landebahn aufsetzt, sofern ggf. vorgesehene sonstige Sicherheitsbedingungen eingehalten sind. Zu letzteren kann beispielsweise ein Verriegelungssensor zählen, der die Initiierung des Leerspülprogramms unterdrückt, sofern nicht der Zugang zu den Toiletten verriegelt ist. Auf diese Weise läßt sich sicherstellen, daß die Leerspülung nur dann abläuft, wenn vom Bordpersonal der Zugang zu den Toiletten verriegelt worden ist, nachdem zuvor überprüft worden ist, daß sich niemand auf den Toiletten befindet.

Nur zur Klarstellung sei angemerkt, daß im Rahmen der vorliegenden Erfindung das Vakuumtoilettensystem auch mehrere Sammelbehälter und/oder Spülwasser-Vorrätsbehälter umfassen kann. Keinesfalls sind die Ansprüche so zu verstehen, daß jeweils nur ein Behälter vorgesehen ist.

Im Folgenden wird die vorliegende Erfindung anhand der Zeichnung näher erläutert. Dabei zeigt
- Fig. 1: in schematischer Darstellung eine bevorzugte Ausführungsform eines Vakuumtoilettensystems nach der vorliegenden Erfindung, und
- Fig. 2: veranschaulicht ein in dem Vakuumtoilettensystem nach Fig. 1 ablaufendes Leerspülprogramm.

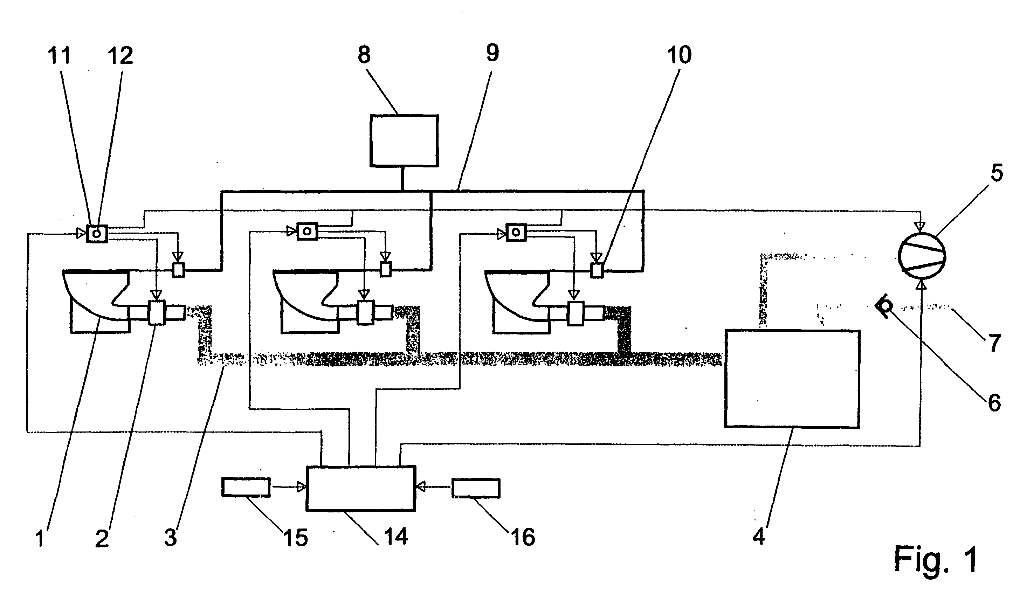

Das in Fig. 1 veranschaulichte Vakuumtoilettensystem umfaßt drei Toiletten 1, die jeweils über ein Spülventil 2 an das Leitungsnetz 3 angeschlossen sind, welches in den Sammelbehälter 4 mündet. Zur Erzeugung eines Unterdrucks in dem Sammelbehälter 4 und im Leitungsnetz 3 ist ein Vakuumgenerator 5 vorgesehen. Des weiteren mündet über ein Rückschlagventil 6 eine Unterdruckleitung 7 ins Freie. Bei ausreichend hohen Flughöhen wird der Unterdruck im Sammelbehälter 4 ausschließlich über die ins Freie mündende Unterdruckleitung 7 bereitgestellt.

Ein Spülwassersystem umfaßt einen Spülwasser-Vorratsbehälter 8, ein Spülwassernetz 9 und pro Toilette ein Spülwasserventil 10. Alternativ oder additiv zu den Spülwasserventilen 10 könnte pro Toilette eine Spülwasserpumpe vorgesehen sein (siehe oben).

Jeder Toilette 1 ist eine Spülsteuerung 11 mit einem Auslöseschalter 12 zugeordnet. Wird der Auslöseschalter 12 betätigt, so läuft in der betreffenden Toilette das in der Spülsteuerung abgespeicherte Standard-Spülprogramm ab, indem zunächst das Spülwasserventil 10 und anschließend das Spülventil 2 der betreffenden Toilette geöffnet wird. Die Öffnungsdauer des Spülwasserventils in dem Standard-Spülprogramm beträgt dabei ca. 1,5 Sek., was einer Spülwassermenge von ca. 0,2 1 entspricht. Die Öffnungszeit des nach dem Schließen des Spülwasserventils 10 geöffneten Spülventils 2 beträgt etwa 4 Sek. Damit auch dann, wenn sich das Flugzeug in niedrigen Flughöhen oder am Boden befindet, eine Spülung der Toiletten möglich ist, wirkt die Spülsteuerung bei geringen Flughöhen oder am Boden auch auf den Vakuumgenerator 5 ein und schaltet diesen zu Beginn des Standard-Spülprogramms ein.

Im Rahmen der vorstehenden Darstellung entspricht das in Fig. 1 dargestellte Vakuumtoilettensystem dem hinlänglichbekannten Stand der Technik. Insoweit wird an dieser Stelle auf weitergehende Erläuterungen verzichtet.

Zur Durchführung eines Leerspülprogramms umfaßt das Vakuumtoilettensystem gemäß Fig. 1 eine zentrale Leerspülsteuerung 14, die auf die den einzelnen Toiletten 1 zugeordneten Spülsteuerungen 11 einwirkt, so daß die Spülventile 2 und die Spülwasserventile 10 der einzelnen Toiletten, um ein spezifisches Leerspülprogramm ablaufen zu lassen, definiert geöffnet und geschlossen werden. Ferner wirkt die zentrale Leerspülsteuerung auf den Vakuumgenerator 5 ein; dieser wird für die Abwicklung des Leerspülprogramms eingeschaltet. Das Öffnungs- und Schließverhalten der einzelnen Spülund Spülwasserventile 2 bzw. 10 für das Leerspülprogramm ist dabei in den Spülsteuerungen 11 abgespeichert. Von der zentralen Leerspülsteuerung 14 wird somit lediglich der Beginn des jeweiligen Leerspülzyklus in der betreffenden Toilette signalisiert. D. h., die den einzelnen Toiletten zugeordneten Spülsteuerungen 11 werden von der zentralen Leerspülsteuerung 14 in definierter Weise nacheinander angesteuert, um den jeweiligen dezentral abgelegten Leerspülzyklus zu initiieren.

Das aus den einzelnen Leerspülzyklen zusammengesetzte Leerspülprogramm wird nach der Landung des betreffenden Flugzeuges automatisch ausgelöst. Hierzu wirkt auf die zentrale Leerspülsteuerung 14 ein Bodenkontaktsensor 15 ein, der ein Signal abgibt, sobald das Flugzeug auf der Landebahn aufsetzt. Als Sicherheitsbedingung ist dabei des weiteren ein Verriegelungssensor 16 vorgesehen, der die Verriegelung eines Zugangs zu den Toiletten signalisiert.

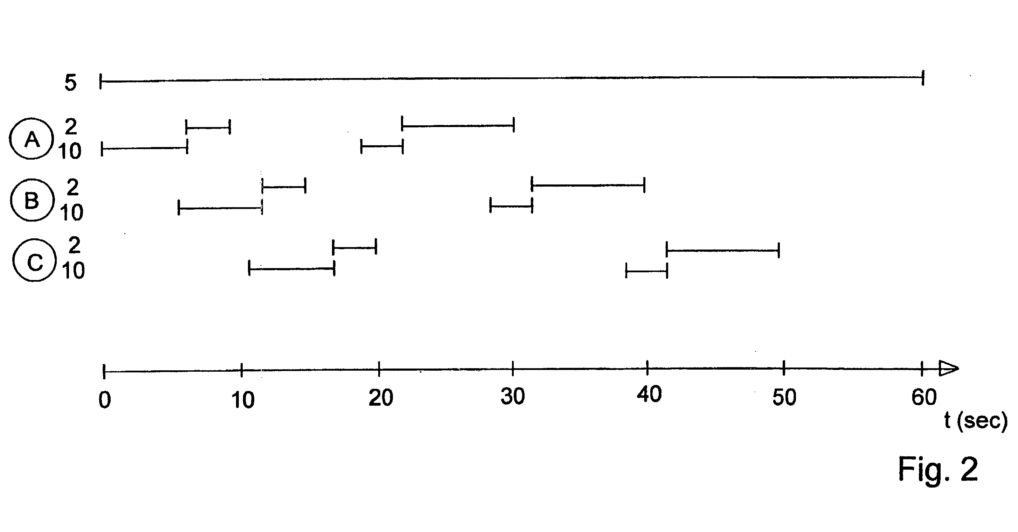

Fig. 2 veranschaulicht beispielhaft ein Leerspülprogramm für das in Fig. 1 dargestellte, drei Toiletten umfassende Vakuumtoilettensystem. Das Leerspülprogramm umfaßt dabei zwei Leerspülzyklensequenzen, die nacheinander ablaufen. Jede Leerspülzyklensequenz umfaßt für jede der drei Toiletten A, B und C einen Leerspülzyklus, der sich wiederum aus einer definierten Öffnung des Spülwasserventils 10 und einer definierten Öffnung des Spülventils 2 zusammensetzt. Im Rahmen der ersten Leerspülzyklensequenz ist das Spülwasserventil jeder Toilette 6 Sek. geöffnet, so daß etwa 700 g Wasser in die betreffende Toilette einlaufen. Nach Schließen des Spülwasserventils 10 wird das Spülventil 2 ca. 3 Sek. geöffnet. Ziel dieses Leerspülzyklus' ist eine möglichst vollständige Entfernung des Belags an den Rohrinnenwänden.

Während der zweiten Leerspülzyklensequenz liegt eine grundlegend andere Spülcharakteristik vor. Hier wird bei jedem Leerspülzyklus das Spülwasserventil 10 ca. 3 Sek. geöffnet, wohingegen das Spülventil 2 anschließend für einen Zeitraum von ca. 8 Sek. geöffnet ist. Ziel des zweiten Zyklus' ist eine möglichst vollständige Entleerung der Steigleitungen.

Dabei sei angemerkt, daß das in Fig. 2 veranschaulichte Leerspülprogramm zugeschnitten ist auf ein Vakuumtoilettensystem, bei dem die Toiletten als Unterflurtoiletten ausgestaltet sind, wobei die Leerspülung hier speziell für eine möglichst vollständige Entleerung der Steigleitungen des Leitungsnetzes ausgelegt ist. Bei einer andersartigen Anordnung der Toiletten empfiehlt sich eine abweichende, abgestimmte Charakteristik der Leerspülzyklen.

Durch die Überlappung der Leerspülzyklen der einzelnen Toiletten innerhalb der Leerspülzyklensequenzen gelingt es, die Einschaltdauer des zu Beginn des Leerspülprogramms eingeschalteten Vakuumgenerators 5 zu minimieren. Ersichtlich sind für das gesamte, zwei Leerspülzyklensequenzen umfassende Leerspülprogramm einschließlich eines 10 Sek. dauernden, der Kühlung des Vakuumgenerators dienenden Nachlaufs weniger als 60 Sek. erforderlich. Es liegt somit eine besonders effiziente Ausnutzung des Vakuumgenerators, der bei einer Betriebsdauer in der genannten Größenordnung keinen Schaden nimmt, vor.

Nur der Vollständigkeit halber sei klargestellt, daß das in Fig. 2 skizzierte Leerspülprogramm auch direkt in der zentralen Leerspülsteuerung 14 (vgl. Fig. 1) abgespeichert sein kann, wobei in diesem Falle die zentrale Leerspülsteuerung nicht auf die Spülsteuerungen 11 einwirkt, sondern vielmehr unmittelbar auf die Spülventile 2 und die Spülwasserventile 10 der einzelnen Toiletten 1.

## Patentansprüche

1. Vakuumtoilettensystem für ein Fahrzeug, insbesondere für ein Passagierflugzeug, umfassend eine Mehrzahl von Toiletten (1), einen Sammelbehälter (4), ein die Toiletten (1) über jeweils ein Spülventil (2) mit dem Sammelbehälter (4) verbindendes Leitungsnetz (3), einen strömungstechnisch mit dem Sammelbehälter (4) verbundenen Vakuumgenerator (5), einen Spülwasser-Vorratsbehälter (8) und ein die Toiletten (1) über jeweils ein Spülwasserventil (10) und/oder eine Spülwasserpumpe mit dem Spülwasser-Vorratsbehälter (8) verbindendes Spülwassernetz (9), wobei eine auf das Spülventil (2) und das Spülwasserventil (10) bzw. die Spülwasserpumpe der einzelnen Toiletten (1) einwirkende Spülsteuerung (11) vorgesehen ist, die über ein der betreffenden Toilette zugeordnetes Auslösemittel (12) betätigbar und in der ein Standard-Spülprogramm abgespeichert ist,
**dadurch gekennzeichnet,**
**daß** eine zentrale Leerspülsteuerung (14) vorgesehen ist, die auf den Vakuumgenerator (5) sowie die Spülventile (2) und die Spülwasserventile (10) bzw. die Spülwasserpumpe sämtlicher Toiletten (1 einwirkt und bei Auslösung ein sämtliche Toiletten erfassendes Leerspülprogramm mit mindestens einem Leerspülzyklus pro Toilette ablaufen läßt.

2. Vakuumtoilettensystem nach Anspruch 1,
**dadurch gekennzeichnet,**
**daß** mindestens ein für sämtliche Toiletten (1) übereinstimmender Leerspülzyklus in einer zentralen Steuereinheit (14) abgespeichert ist.

3. Vakuumtoilettensystem nach Anspruch 1 oder Anspruch 2,
**dadurch gekennzeichnet,**
**daß** das Leerspülprogramm pro Toilette (1) mindestens einen Leerspülzyklus umfaßt, bei dem das Verhältnis der Öffnungsdauer des Spülwasserventils (10) bzw. der Betriebsdauer der Spülwasserpumpe zur Öffnungsdauer des Spülventils (2) größer ist als beim Standard-Spülprogramm.

4. Vakuumtoilettensystem nach einem der Ansprüche 1 bis 3,
**dadurch gekennzeichnet,**
**daß** das Leerspü1program pro Toilette (1) zwei Leerspülzyklen mit einer unterschiedlichen Spülcharakteristik umfaßt.

5. Vakuumtoilettensystem nach Anspruch 4,
**dadurch gekennzeichnet,**
**daß** das Verhältnis der Öffnungsdauer des Spülwasserventils (10) bzw. der Betriebsdauer der Spülwasserpumpe zur Öffnungsdauer des Spülventils (2) beim zweiten Leerspülzyklus geringer ist als beim ersten Leerspülzyklus.

6. Vakuumtoilettensystem nach einem der Ansprüche 1 bis 5,
**dadurch gekennzeichnet,**
**daß** die Leerspülzyklen der einzelnen Toiletten einander überlappen.

7. Vakuumtoilettensystem nach einem der Ansprüche 1 bis 6,
**dadurch gekennzeichnet,**
**daß** zwei jeweils sämtliche Toiletten erfassende Leerspülzyklensequenzen nacheinander ablaufen.

8. Vakuumtoilettensystem nach einem der Ansprüche 1 bis 7,
**dadurch gekennzeichnet,**
**daß** das Leitungsnetz (3) zumindest teilweise auf einem höheren Niveau als zumindest ein Teil der Toiletten (1) angeordnet ist.

9. Vakuumtoilettensystem nach einem der Ansprüche 1 bis 8,
**dadurch gekennzeichnet,**
**daß** auf die zentrale Leerspülsteuerung (14) ein Bodenkontaktsensor (15) einwirkt, der ein das Leerspülprogramm initiierendes Signal abgibt.

10. Vakuumtoilettensystem nach einem der Ansprüche 1 bis 9,
**dadurch gekennzeichnet,**
**daß** auf die zentrale Leerspülsteuerung (14) mindestens ein Verriegelungssensor (16) einwirkt, der das Leerspülprogramm bei nicht verriegeltem Zugang zu den Toiletten (1) unterdrückt.

## Claims

1. Vacuum toilet system for a vehicle, particularly a passenger aircraft, comprising a number of toilets (1), a collecting tank (4), a pipe network (3) which connects the toilets (1) with the collecting tank (4) via one flush valve (2) per toilet, a vacuum generator (5) which is connected with the collecting tank (4) in a fluidic manner, a flush water tank (8) and a flush water system (9) which connects each toilet (1) via one flush water valve (10) and/or a flush water pump with the flush water tank (8); the flush control (11) acts on the rinse valve (2) and the flush water valve (10) or the flush water pump of the individual toilets (I) and can be actuated via an actuating means (12) assigned to the toilet concerned, a standard flush program being stored in the said control, **characterised in that** a centralized empty-flush control (14) is provided acting on the vacuum generator (5), the flush valves (2) and the flush water valves (10) or the flush water pump of all toilets and, when actuated, causing an empty-flush program to run covering all toilets, comprising at least one empty-flush cycle per toilet.

2. Vacuum toilet system as in Claim 1, **characterised in that** at least one identical empty-flush cycle for all toilets (1) is stored in the memory of a central control unit (14).

3. Vacuum toilet system according to Claim 1 or Claim 2, **characterised in that** the empty-flush program for each toilet (1) comprises at least one empty-flush cycle within which the ratio of the opening time of the flush water valve (10) or the operation of the flush water pump to the opening time of the flush valve (2) is greater than in a standard flush program.

4. Vacuum toilet system according to one of the Claims 1 to 3, **characterised in that** the empty-flush program for each toilet (1) comprises two empty-flush cycles with a different characteristic.

5. Vacuum toilet system according to Claim 4, **characterised in that** the ratio of the opening time of the flush water valve (10) or the operating time of the flush water pump to the opening time of the flush valve (2) during the second empty-flush cycle is smaller than during the first empty-flush cycle.

6. Vacuum toilet system according to one of the Claims 1 to 5, **characterised in that** the empty-flush cycles at the individual toilets overlap.

7. Vacuum toilet system according to one of the Claims 1 to 6, **characterised in that** each two empty-flush sequences for all toilets run successively.

8. Vacuum toilet system according to one of the Claims 1 to 7, **characterised in that** the duct system (3) is arranged at least in part at a higher level than at least some of the toilets (1).

9. Vacuum toilet system according to one of the Claims 1 to 8, **characterised in that** a floor contact sensor (15) acts on the central empty-flush control (14), sending a signal initiating the empty-flush program.

10. Vacuum toilet system according to one of the Claims 1 to 9, **characterised in that** at least one interlocking sensor (16) acts on the empty-flush control (14), which suppresses the empty-flush program when access to the toilets (1) is not locked.

## Revendications

1. Système de toilettes à dépression pour un véhicule, en particulier pour un avion de transport de passagers, comprenant plusieurs toilettes (1), une cuve collectrice (4), un réseau de conduites (3) qui relie les toilettes (1) à la cuve collectrice (4) par l'intermédiaire chaque fois d'une soupape de vidange (2), un générateur de dépression (5) qui est connecté sur le plan de l'écoulement à la cuve collectrice (4), un réservoir d'eau de chasse (8) et un réseau d'eau de chasse (9) qui relie les toilettes (1) au réservoir d'eau de chasse (8) via une vanne de chasse d'eau (10) et/ou une pompe à eau de chasse, dans lequel il est prévu une commande de chasse (11) qui agit sur la soupape de vidange (2) ou sur la vanne de chasse d'eau et peut être actionnée par l'intermédiaire d'un moyen de déclenchement (12) associé aux toilettes concernées et dans lequel un programme de rinçage standard est mémorisé, **caractérisé en ce qu'**il est prévu une commande de vidange (14) centrale qui agit à la fois sur le générateur de dépression (5), les soupapes de vidange (2) et les vannes de chasse d'eau (10) ou la pompe à eau de chasse de toutes les toilettes (1) et qui, lors d'un déclenchement, déroule un programme de vidange englobant toutes les toilettes avec au moins un cycle de vidange pour chaque toilette.

2. Système de toilettes à dépression selon la revendication 1, **caractérisé en ce qu'**au moins un cycle de vidange adapté pour toutes les toilettes (1) est mémorisé dans l'unité de commande centrale (14).

3. Système de toilettes à dépression selon la revendication 1 ou 2, **caractérisé en ce que** le programme de vidange comprend pour chaque toilettes (1) au moins un cycle de vidange dans lequel le rapport de la durée d'ouverture de la vanne de chasse d'eau (10) ou de la durée de fonctionnement de la pompe à eau de chasse à la durée d'ouverture de la soupape de vidange (2) est supérieur à celui d'un programme standard.

4. Système de toilettes à dépression selon une des revendications 1 à 3, **caractérisé en ce que** le programme de vidange comprend pour chaque toilettes (1) deux cycles de vidange avec des caractéristiques de vidange différentes.

5. Système de toilettes à dépression selon la revendication 4, **caractérisé en ce que** le rapport de la durée d'ouverture de la vanne de chasse d'eau (10) à la durée d'ouverture de la soupape de vidange (2) est plus faible dans le second cycle de vidange que dans le premier cycle de vidange.

6. Système de toilettes à dépression selon une des revendications 1 à 5, **caractérisé en ce que** les cycles de vidange des différentes toilettes se chevauchent mutuellement.

7. Système de toilettes à dépression selon une des revendications 1 à 6, **caractérisé en ce que** deux séquences de cycle de vidange englobant chaque fois toutes les toilettes se déroulent l'une derrière l'autre.

8. Système de toilettes à dépression selon une des revendications 1 à 7, **caractérisé en ce que** le réseau de conduites (3) est au moins partiellement situé à un niveau plus élevé qu'une partie au moins des toilettes (1).

9. Système de toilettes à dépression selon une des revendications 1 à 8, **caractérisé en ce qu'**un détecteur de sol (15), qui délivre un signal d'initiation du programme de vidange, agit sur la commande centrale de vidange (14).

10. Système de toilettes à dépression selon une des revendications 1 à 9, **caractérisé en ce qu'**un détecteur de verrouillage (16), qui inhibe le programme de vidange lorsque l'accès aux toilettes (1) n'est pas verrouillé, agit sur la commande centrale de vidange (14).
